# FASCICULE DE BREVET EUROPEEN

(11) **EP 0 620 202 B1**
(45) Date de publication et mention de la délivrance du brevet: **02.04.1997**
(21) Numéro de dépôt: 93401417.6
(22) Date de dépôt: 03.06.1993
(51) Int. Cl.: C03C 17/34

(54) **Procédé de traitement du verre pour l'adhérence d'un polymère**
Verfahren zur Behandlung von Glas zum Haften von polymeren Stoffen
Process for treating glass for the adherence of polymer material

(30) Priorité: 13.04.1993 FR 9304329
(43) Date de publication de la demande: 19.10.1994
(73) Titulaire: SAINT-GOBAIN EMBALLAGE, F-92400 Courbevoie (FR)
(72) Inventeur: L'Her, Anne, F-75018 Paris (FR); Popovici, Madeleine, F-93400 Saint-Ouen (FR)
(74) Mandataire: Muller, René

(56) Documents cités:
- US-A- 3 676 186
- US-A- 3 827 871
- US-A- 4 389 266

## Description

Le procédé concerne un traitement du verre permettant de favoriser l'adhérence d'un polymère sur le verre.

Le procédé selon l'invention concerne notamment le traitement du buvant d'objets creux en verre, tels que des pots, bouteilles, gobelets, flacons pour permettre l'adhérence d'un opercule sur le buvant.

Cet opercule est généralement composé d'un film aluminium associé à un film polymère.

Le film polymère est thermofusible et fait office d'adhésif collant la membrane sur le récipient.

Le problème posé par cette adhérence est qu'elle n'est pas obtenue de façon satisfaisante dans tous les cas.

Différentes solutions permettant d'améliorer cette adhérence ont déjà été décrites dans l'art antérieur.

Le brevet français publié sous le n° 2 519 956 décrit un procédé consistant à déposer sur le buvant un revêtement tel que l'oxyde d'étain sur lequel on redépose un complexe de chrome afin d'assurer une liaison plus forte.

Cette technique apporte des résultats satisfaisants mais nécessite des conditions très délicates quant au dépôt du complexe de chrome, en raison de son instabilité.

En effet, les conditions de travail imposées pour permettre une bonne durabilité du complexe sont très précises en ce qui concerne le pH, la température de la solution de complexe et le degré hygrométrique de l'air.

Le brevet français publié sous le n° 2 616 144 décrit une autre solution qui consiste en une désalcalinisation du buvant par une décharge couronne. Le traitement ainsi réalisé présente de bons résultats dans certains cas mais conduit à une adhérence insuffisante pour certains types de polymères utilisés pour les opercules de thermoscellage.

Il est également connu de réaliser une désalcalinisation par un traitement chimique. Cette dernière solution nécessite un traitement très long qui ne conduit pas à de meilleurs résultats.

L'invention a pour but un procédé de traitement du buvant d'objets creux en verre permettant une adhérence suffisante et durable d'un opercule sur le buvant, sans nécessiter de conditions délicates, et adaptable à tout type d'opercules couramment utilisées.

L'invention a également pour but d'adapter la solution à différents types de verre tels que les verres de type "sodo-calcique", "borosilicate" ou du type "opale".

Ces trois types de verre sont les plus usuels dans les industries qui utilisent le thermoscellage d'opercule sur des récipients en verre.

Les différents inconvénients, liés au thermoscellage d'opercules sur des récipients de verre, évoqués précédemment sont résolus selon l'invention par un procédé de traitement du verre destiné au thermoscellage d'un polymère, consistant en une étape de dépôt d'une couche d'oxyde métallique puis une étape de dépôt d'une couche d'un sel soluble de chrome.

Selon un mode préféré de l'invention le dépôt du sel soluble de chrome se fait par enduction.

Le sel soluble de chrome est avantageusement choisi comme étant le nitrate de chrome. De préférence, le nitrate de chrome (Cr(NO₃)₃, 9 H₂O) est utilisé en solution acqueuse avec une teneur inférieure à 2 % et de préférence encore, égale à 1,5 %.

Le dépôt de la couche d'oxyde métallique peut se faire par pyrolyse en phase gazeuse (CHEMICAL Vapor Deposition) ou par pulvérisation de solutions des sels métalliques ou par toute autre technique connue de l'homme du métier.

L'oxyde métallique est avantageusement choisi comme appartenant au groupe comprenant l'oxyde d'étain et l'oxyde de titane.

Le procédé ainsi décrit permet d'obtenir une adhérence verre-polymère après thermoscellage suffisante et durable pour différents types de polymères usuellement utilisés sur les opercules, et pour différentes natures de verre.

Un dispositif comportant un moyen pour déposer une couche d'oxyde métallique et un moyen pour déposer une couche de sel soluble de chrome, est bien adapté pour la mise en oeuvre du procédé selon l'invention.

De façon préférée, le moyen pour déposer le sel soluble de chrome est un dispositif enducteur tel qu'au moins un rouleau enducteur.

De façon préférée également, le moyen pour déposer une couche d'oxyde métallique est une hotte pour pyrolyse en phase gazeuse, ou pour la pulvérisation de solution de sels métalliques.

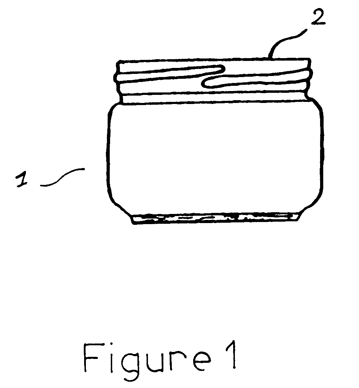

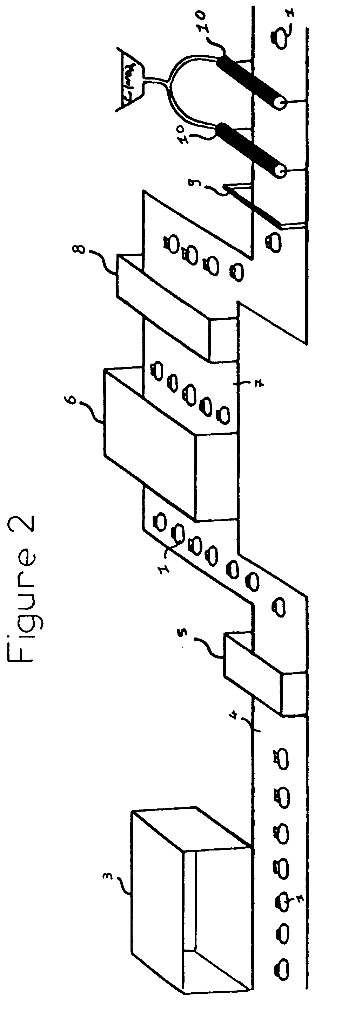

D'autres détails et caractéristiques avantageuses de l'invention ressortent ci-après de la description d'un exemple de dispositif mettant en oeuvre le procédé décrit en référence aux figures 1 et 2 qui représentent :
- **figure 1**, un exemple de pot à traiter,
- **figure 2**, un schéma d'un exemple de dispositif pour la mise en oeuvre du procédé selon l'invention.

Sur la figure 1, le buvant 2 du pot 1 est la zone à traiter sur laquelle on vient thermosceller l'opercule. Le buvant d'un objet creux en verre correspond à la zone périphérique de cet objet délimitant son ouverture et plus particulièrement la zone sur laquelle est effectué le thermoscellage.

En sortie de machine de formage 3, les pots encore chauds sont convoyés par un tapis 4.

Les pots 1 subissent la première phase du traitement qui est le dépôt d'une couche d'oxyde métallique, tel que l'oxyde d'étain ou l'oxyde de titane.

Ce dépôt peut se faire par exemple par pyrolyse en phase gazeuse de tétrachlorure d'étain. Dans le cas de l'oxyde de titane, on utilise du tétrachlorure de titane. Le dépôt se fait alors sous une hotte 5 où l'on injecte du tétrachlorure d'étain, dans une atmosphère chaude comprise entre 400 et 600°C. Le temps de séjour des pots sous la hotte est de l'ordre d'une demi-minute et suffit pour la pyrolyse du tétrachlorure d'étain qui conduit à une couche d'oxyde d'étain.

Après le dépôt de la couche d'oxyde métallique, les pots 1 transitent dans une arche de recuisson 6 où ils sont recuits lentement. L'arche de recuisson 6 est par exemple du type à tunnel. La température des pots en sortie de four 6 est comprise entre 70 et 130°C. Le temps de séjour des pots dans l'arche de recuisson 6 est de l'ordre d'une demi-heure à deux heures.

Pour permettre ce temps de séjour, les pots ne transitent plus un par un mais en ligne sur un convoyeur 7 plus large. Pour cela, on utilise différents tapis convoyeurs pouvant aller à des vitesses différentes qui permettent de regrouper les pots par un arrangement de ces tapis bien connu pour ce type d'utilisation.

Dans le cas présent, il est usuel qu'à la sortie de l'arche de recuisson 6, les pots subissent un traitement dans une hotte 8 qui apporte un lubrifiant sur le pot. Ce lubrifiant peut être apporté par vaporisation d'acide gras, tel qu'un acide oléique ou par pulvérisation de cires ou d'esters de polyéthylène. Ce traitement permet le frottement des pots les uns sur les autres en diminuant les risques de rayures au cours des manipulations intervenant par la suite lors du remplissage ou de la manutention.

L'accrochage du lubrifiant sur le pot est facilité par la présence de l'oxyde métallique qui a été pyrolysé sur tout le pot.

Par contre, la présence du lubrifiant sur le buvant 2 du pot est néfaste au dépôt d'une couche de nitrate de chrome.

Il est donc nécessaire de supprimer le lubrifiant qui a été déposé sur le buvant 2. Pour cela, les pots circulant alors de nouveau un par un grâce à un arrangement de tapis, on utilise tout moyen 9 connu de l'homme du métier, tel qu'un brûleur. Le brûleur est représenté dans une position transversale par rapport au défilement des pots mais il peut également être dans toutes autres positions notamment parallèle à l'axe d'avancement du convoyeur. Il est également possible de disposer plusieurs brûleurs. Ce traitement est très bref de façon à ne pas supprimer la couche d'oxyde métallique déjà déposée.

La deuxième phase du traitement est alors appliquée. Il s'agit du dépôt d'une couche de nitrate de chrome. Cette couche est enduite sur le buvant 2 du pot 1. Il est possible par exemple d'utiliser un ou plusieurs rouleaux enducteurs 10. On adjoint alors un contrôle d'humidité, par exemple par conductimétrie ou par mesure infra-rouge et un contrôle de température du buvant dont la température doit être entre 80 et 120°C. Ce dernier contrôle se fait par exemple par pyromètre à contact. Ces deux contrôles ne sont pas représentés sur les figures.

Le dispositif met ainsi en oeuvre les deux phases du traitement qui sont le dépôt d'une couche d'oxyde métallique, notamment d'oxyde d'étain, par exemple, par pyrolyse en phase gazeuse et le dépôt d'une couche de nitrate de chrome, par exemple par un rouleau enducteur.

Des essais de thermoscellage des pots ont été effectués d'une part sur des pots en verre sodo-calcique et d'autre part, sur des pots en verre opale. Dans les deux cas, on a thermoscellé des opercules du type aluminium plus polymère.

La solution de nitrate de chrome utilisée est une solution acqueuse à 1,5 % en Cr(No₃)₃, 9 H₂O.

Pour apprécier les résultats obtenus après traitement selon l'invention, nous pouvons les comparer aux résultats obtenus par traitement "oxyde d'étain plus complexe de chrome" qui sont considérés comme satisfaisants pour les différents types de films polymère testés.

Des essais de thermoscellage ont été menés pour quatre types de films :
- A :: base polyéthylène plus greffons acide méthacrylique neutralisés par des cations zinc
- B :: base polyéthylène plus greffons esters saturés
- C :: base polyéthylène plus charge du type talc
- D :: base poléthylène plus greffons esters insaturés et groupements aminosilanes

Le thermoscellage est réalisé suivant les paramètres suivants :
- consigne de température de scellage :
   290°C pour le verre sodocalcique
   310°C pour le verre opale
- pression de scellage : 5 bars
- temps de thermoscellage : 1,5 seconde

Après thermoscellage, on réalise le test accéléré suivant : les pots à demi remplis d'eau sont thermoscellés et placés tête en bas dans l'eau d'un bac placé dans une étuve à 50°C pendant 24 heures.

La mesure d'adhésion est ensuite effectuée à température ambiante par un test de pelage à 90°. Elle est exprimée en N/cm.

Les mesures sont effectuées sur des pots ayant subis un vieillissement après enduction. Le vieillissement consiste en un stockage.

En ce qui concerne le verre de type sodo-calcique, les résultats sont présentés dans le tableau suivant pour des essais réalisés après vieillissement de 1 mois et de 6 mois.

| traitement | durée de vieillissement | film A | film B | film C | film D |
|---|---|---|---|---|---|
| Pas de traitement | | 0 | 0 | 0 | 0 |
| SnO₂ + complexe de chrome | 1 mois | >30 | 6 | 6 | 8 |
| | 6 mois | 6 | 3 | 6 | 5 |
| SnO₂ + nitrate de chrome | 1 mois | >30 | 6 | 5 | 6 |
| | 6 mois | 7 | 4 | 5 | 6 |

Il apparaît que les résultats obtenus après traitement selon l'invention sont très proches de ceux que l'on obtient par un traitement classique c'est-a-dire par dépôts successifs d'oxyde d'étain et d'une couche de complexe de chrome.

Il semble même que les résultats obtenus après un vieillissement de 6 mois soient légèrement supérieurs lorsque le traitement est réalisé selon l'invention, tout au moins pour les films de type A, B et D.

Pour les verres dits opales, les essais ont été réalisés après vieillissement de 1 mois, 6 mois, et 1 an.

Les verres dits opales sont des verres qui comportent des cristaux et présentent une opalescence.

| traitement | durée de vieillissement | film A | film B | film C | film D |
|---|---|---|---|---|---|
| Pas de traitement | | 0 | 0 | 0 | 0 |
| SnO₂ + complexe de chrome | 1 mois | >30 | 6 | 5 | 9 |
| | 6 mois | >30 | 5 | 5 | 5 |
| | 1 an | 16 | 3 | 3 | 3 |
| SnO₂ + nitrate de chrome | 1 mois | >30 | 5 | 9 | 9 |
| | 6 mois | >30 | 3 | 9 | 6 |
| | 1 an | 15 | 3 | 5 | 5 |

Tout comme les résultats obtenus pour les verres de type sodo-calcique, les résultats, pour les verres opales obtenus selon l'invention sont très proches de ceux obtenus selon un traitement classique qui consiste en un dépôt d'oxyde d'étain suivi d'un dépôt d'une couche de complexe de chrome.

Les résultats obtenus selon l'invention semblent même meilleurs pour les films C et D.

Les résultats présentés dans ces deux tableaux montrent que le procédé selon l'invention, qui consiste en un premier dépôt d'un oxyde métallique tel que l'oxyde d'étain puis d'un second dépôt d'une couche de nitrate de chrome, conduit à un thermoscellage, tant sur verre de type sodo-calcique, que sur verre dit opale, tout à fait satisfaisant. Il est en effet comparé à une technique classique (SnO₂ + complexe de chrome) considérée elle-même comme satisfaisante.

Le procédé selon l'invention est donc comparable à la technique antérieure d'un point de vue résultats mais sa mise en oeuvre est beaucoup plus intéressante. En effet, il ne demande aucune condition particulière de mise en oeuvre alors que la technique antérieure et notamment l'utilisation du complexe de chrome est soumise à des conditions très rigoureuses, souvent difficiles à respecter en milieu industriel.

D'autre part, les essais réalisés après vieillissement, c'est-à-dire pour lesquels un temps défini s'est écoulé entre le traitement et le thermoscellage, traduisent une faisabilité industrielle. En effet, ces essais après vieillissement sont importants car généralement, les pots sont traités par leur fabricant et livrés à l'utilisateur qui effectuera, après un temps de stockage, le thermoscellage; celui-ci doit pouvoir encore être assuré.

Il en est de même du test accéléré réalisé entre la phase de thermoscellage et les essais de pelage. Il garantit la fiabilité du thermoscellage dans le temps, c'est-à-dire que celui-ci doit rester suffisant tout au moins jusqu'à la date de péremption du produit contenu dans le récipient.

D'autres essais ont été réalisés de façon à étudier l'influence de la concentration en nitrate de chrome III (Cr(N0₃)₃, 9 H₂0) en solution acqueuse pour chacun des films déjà cités.

Les essais ont été réalisés pour les concentrations suivantes :
O,23 g CrIII/l soit 0,18 % en Cr(N0₃)₃, 9 H₂0
0,52 g CrIII/l soit 0,40 % en Cr(N0₃)₃, 9 H₂0
2 g CrIII/l soit 1,5 % en Cr(N0₃)₃, 9 H₂0
5,2 g CrIII/l soit 4 % en Cr(N0₃)₃, 9 H₂0

Après le traitement d'enduction, les pots sont vieillis en stockage pendant une durée de 7 jours.

Ils sont ensuite remplis d'eau à moitié puis thermoscellés. Ils sont alors placés en position renversée ("tête en bas") dans un bain marie à 50°C durant 24 heures. Après ce traitement et refroidissement en position normale jusqu'à température ambiante, on procède sur les pots à l'arrachement de l'opercule et donc à la mesure de la force d'adhésion par un test de pelage à 90°. Les résultats obtenus sont exprimés en N/cm et sont présentés dans le tableau suivant :

| Films | | A | B | C | D |
|---|---|---|---|---|---|
| vieillissement | | 7 j | 7 j | 7 j | 7 j |
| Nitrate de CrIII | O,23g/l (0,18 %) | 17 | 5 | 5 | 6 |
| | O,52 g/l (0,4 %) | 18 | 5 | 5 | 7 |
| | 2 g/l (1,5 %) | >30 | 6 | 5 | 10 |
| | 5,2 g/l (4 %) | >30 | 6 | 5 | 10 |

Ces résultats montrent d'une part que pour les films de type A et D, des concentrations supérieures à 2g/l n'augmente plus l'adhésion.

En ce qui concerne les filsm B et C, l'adhésion est indépendante de la concentration en nitrate de chrome.

Il semble donc possible d'utiliser des concentrations inférieures à 2 % en nitrate de chrome (Cr(NO₃)₃, 9 H₂O) qui permettent d'obtenir une adhérence optimale pour chaque type de film.

## Revendications

1. Procédé de traitement du verre destiné au thermoscellage d'un polymère, **caractérisé en ce qu'**il comporte une étape de dépôt d'une couche d'oxyde métallique et une étape de dépôt d'une couche d'un sel soluble de chrome.

2. Procédé selon la revendication 1, **caractérisé en ce que** le dépôt du sel soluble de chrome se fait par enduction.

3. Procédé selon les revendications 1 ou 2, **caractérisé en ce que** le sel soluble de chrome est le nitrate de chrome.

4. Procédé selon la revendication 3, **caractérisé en ce que** le nitrate de chrome (Cr(NO3)3, 9 H2O) est utilisé en solution aqueuse avec une teneur inférieure à 2% et de préférence égale à 1,5%.

5. Procédé selon l'une des revendications précédentes, **caractérisé en ce que** le dépôt de la couche d'oxyde métallique se fait par pyrolyse en phase gazeuse ou par pulvérisation de solutions de sels métalliques.

6. Procédé selon l'une des revendications précédentes, **caractérisé en ce que** l'oxyde métallique appartient au groupe comprenant l'oxyde d'étain et l'oxyde de titane.

7. Objet creux en verre tel que flacon, pot, traité au moins sur le buvant selon le procédé décrit dans les revendications 1 à 6, comprenant sur la partie traitée une couche d'un sel soluble de chrome sur une couche d'oxyde métallique et prêt à être recouvert, par thermoscellage, d'un opercule comportant au moins un film polymère.

## Claims

1. Method of treating glass intended for the heat-sealing of a polymer, characterized in that it consists of a deposition step of a metallic oxide film and a deposition step of a film of a soluble salt of chromium.

2. Method according to claim 1, characterized in that the deposition of the soluble chromium salt is performed by coating.

3. Method according to claim 1 or 2, characterized in that the soluble chromium salt is chromium nitrate.

4. Method according to claim 3, characterized in that the chromium nitrate (Cr (NO₃)₃, 9 H₂O) is used in aqueous solution with a content lower than 2% and preferably equal to 1.5%.

5. Method according to one of the preceding claims, characterized in that the deposition of the metallic oxide film is performed by pyrolysis in gaseous phase or by sputtering of solutions of metallic salts.

6. Method according to one of the preceding claims, characterized in that the metallic oxide belongs to the group comprising tin oxide and titanium oxide.

7. Hollow object of glass such as a bottle, pot, treated at least on the mouth according to the method described in claims 1 to 6, comprising, on the treated part, a film of a soluble chromium salt on a film of metallic oxide and ready to be covered, by heat-sealing, with a cap comprising at least one polymer film.

## Patentansprüche

1. Verfahren zur Behandlung von Glas für das Heißsiegeln mit einem Polymer, **dadurch gekennzeichnet, daß** es eine Stufe zum Aufbringen einer Metalloxidschicht und eine Stufe zum Aufbringen einer Schicht eines löslichen Chromsalzes umfaßt.

2. Verfahren nach Anspruch 1, **dadurch gekennzeichnet, daß** das lösliche Chromsalz durch Beschichten aufgebracht wird.

3. Verfahren nach Anspruch 1 oder 2, **dadurch gekennzeichnet, daß** das lösliche Chromsalz Chromnitrat ist.

4. Verfahren nach Anspruch 3, **dadurch gekennzeichnet, daß** das Chromnitrat, Cr(NO₃)₃·9H₂O, in Form einer wäßrigen Lösung mit einem Gehalt von unter 2 und vorzugsweise gleich 1,5 % angewendet wird.

5. Verfahren nach einem der vorhergehenden Ansprüche, **dadurch gekennzeichnet, daß** die Metalloxidschicht durch Gasphasenpyrolyse oder durch Aufsprühen von Metallsalzlösungen aufgebracht wird.

6. Verfahren nach einem der vorhergehenden Ansprüche, **dadurch gekennzeichnet, daß** das Metalloxid zu einer Gruppe gehört, die Zinnoxid und Titanoxid umfaßt.

7. Hohlglaserzeugnis wie eine Flasche oder ein Topf, das wenigstens auf dem Rand seiner Öffnung gemäß dem in den Ansprüchen 1 bis 6 beschriebenen Verfahren behandelt worden ist, auf dem behandelten Bereich eine Schicht eines löslichen Chromsalzes auf einer Metalloxidschicht enthält und fertig ist, mit einem Verschluß, der mindestens einen Polymerfilm umfaßt, durch Heißsiegeln verschlossen zu werden.
